# EUROPEAN PATENT APPLICATION

(11) **EP 4 684 840 A1**
(43) Date of publication of application: **28.01.2026**
(21) Application number: 24194580.7
(22) Date of filing: 14.08.2024
(51) Int. Cl.: A62B 7/02, A62B 9/04, F16D 7/00

(54) **SECURE THREADED CONNECTION**

(30) Priority: 26.07.2024 EP 24191237
(71) Applicant: Dräger Safety AG & Co. KGaA, 23560 Lübeck (DE)
(72) Inventor: LAGEAT, Emilie, Morpeth, NE61 5BB (GB); RINGER, Paul, Consett, DH8 0ET (GB); FARNABY, James, Newcastle upon Tyne, NE3 5QL (GB)
(74) Representative: Haseltine Lake Kempner LLP

(57) **Abstract**

There is disclosed a threaded connector configured to connect a pneumatic system of a breathing apparatus to a threaded connection of a breathing gas cylinder. The threaded connector comprises a rotatable threaded element configured to connect to a corresponding thread of a breathing gas cylinder, the rotatable threaded element being rotatable to tighten the threaded element to the corresponding thread and to untighten the threaded element from the corresponding thread; and a holding apparatus configured to selectively permit rotation of the threaded element when an applied torque applied to the threaded element exceeds a threshold torque. Also disclosed is a breathing apparatus comprising a threaded connector.

## Description

### Background

Self-contained breathing apparatus (SCBA) systems are typically used by fire fighters to provide safe breathing gas in environments with contaminated atmospheres. Typical SCBA systems have a high-pressure system which includes a breathing gas tank (also referred to as a tank) at a nominal pressure of around 300 bar. The high-pressure system may be connected to a medium-pressure system via a first stage pressure reduction device (e.g., a first stage pressure reducer). Such devices output breathing gas from the high-pressure system into the medium pressure system at a lower pressure, such as around 7 bar. This medium pressure breathing gas may then pass through a second stage pressure reduction device (e.g., a lung demand regulator) to further reduce the pressure to a level suitable for a user, such as a firefighter, to breathe. SCBA systems may generally also include a face mask for supplying breathable gas to a user, and a back plate for securing the breathing gas tank to the user's back.

For firefighters to be able to respond quickly to emergences, at least some of the pneumatic components (e.g., breathing gas tank and first stage pressure reducer) of SCBA systems will generally be stored and transported while connected together. Doing so may reduce any delay in a firefighter responding to an emergency caused by needing to assemble their SCBA system before use.

However, over time, storing and transporting pneumatic components while connected together can lead to loosening of the connections therebetween. This is especially true for connections that are designed to be tightened and untightened regularly by a user. Improvements in connection means used in such situations are therefore desirable.

### Summary

The invention described herein may generally relate to threaded connector configured to connect a pneumatic system of a breathing apparatus to a threaded connection of a breathing gas cylinder. The invention described herein may also generally relate to breathing apparatus comprising a threaded connector.

In a first aspect, there is provided a threaded connector configured to connect a pneumatic system of a breathing apparatus to a threaded connection of a breathing gas cylinder. The threaded connector comprises a rotatable threaded element configured to connect to a corresponding thread of a breathing gas cylinder. The rotatable threaded element is rotatable to tighten the threaded element to the corresponding thread and to untighten the threaded element from the corresponding thread. The threaded connector also comprises a holding apparatus configured to selectively permit rotation of the threaded element when an applied torque applied to the threaded element exceeds a threshold torque.

It will be understood that in this context the term "exceeds a threshold torque" may include equaling a threshold torque. In this way, the holding element may selectively permit rotation of the threaded element if the applied torque equals and/or exceeds the threshold torque. It will be understood that the holding apparatus is a separate apparatus to the threaded connector itself, and therefore the holding apparatus contributes additional resistance to rotation of the threaded connector beyond the simple friction of the threaded connection.

The threaded connector may further comprise a retainer arranged coaxially with the threaded element. The holding apparatus may be configured to selectively permit rotation of the threaded element relative to the retainer.

The holding apparatus may comprise one or more holding mechanisms. The or each holding mechanism may be configured to selectively disengage the threaded element and the retainer when the applied torque exceeds the threshold torque.

The or each holding mechanism may comprise a recess and a protrusion configured to engage the recess to thereby inhibit rotation between the threaded element and the retainer. One of the recess and the protrusion may be disposed on the threaded element. The other of the recess and the protrusion may be disposed on the retainer. The holding mechanism may comprise one or more detents.

The protrusion may be a deformable protrusion configured to deform (e.g., flatten) when the applied torque exceeds the threshold torque, thereby permitting the threaded element to rotate relative to the retainer. Thus, the deformable protrusion may be formed of an appropriately deformable material (e.g., rubber).

The protrusion may be a fixed protrusion which acts against the recess to push the threaded element and the retainer apart in an axial direction.

When the applied torque exceeding the threshold torque is applied to the threaded element, the protrusion of the or each holding mechanism may retract from the recess of the or each holding mechanism, thereby permitting the threaded element to rotate past the retainer.

The threaded element may comprise a first plurality of recesses arranged around a rotational axis of the threaded element. The retainer may comprise a second plurality of protrusions arranged to cooperate with the first plurality of recesses of the threaded element. The first plurality and the second plurality may be different sizes. The first plurality may be greater than the second plurality.

It will be understood that a holding mechanism may comprise any recess and protrusion pair. It will therefore be understood that where a threaded connector includes, for example, more recesses than protrusions, the total number of holding mechanisms will be equal to the number of protrusions. In this way, where there are more recesses than protrusions, there may be a number of recesses not engaged by a protrusion at any one time.

The recess of the or each holding mechanism may be arranged on an axially facing surface of the threaded element. The protrusion of the or each holding mechanism may be arranged on an opposing axially facing surface of the retainer. The axially facing surface of the threaded element and the opposing axially facing surface of the retainer may be biased toward each other.

The threaded element and the retainer maybe biased together, for example by a biasing element such as a spring. The biasing element may urge the axially facing surface of the threaded element toward the opposing axially facing surface of the retainer (or vice versa). When the applied force is applied to the threaded element, the protrusion of the or each holding mechanism may push against the recess of the or each holding mechanism (and against the biasing provided by the biasing element).

The recess of the or each holding mechanism may be arranged on an annular surface of the threaded element. The protrusion of the or each holding mechanism may be arranged on an opposing annular surface of the retainer. The annular surfaces may be concentric. The annular surface of the threaded element may be an external annular surface of the threaded element. The opposing annular surface of the retainer may be an opposing internal annular surface of the retainer.

The annular surface of the threaded element will be understood to mean a curved surface defining an opening of the threaded element. The annular surface of the retainer will be understood to mean a curved surface defining an opening of the retainer.

The protrusion of the or each holding mechanism may be a plunger. The plunger may be a ball plunger. The plunger may be configured to retract away from the recess of the or each holding mechanism when the applied torque exceeds the threshold torque. The plunger may be biased to extend into the recess when the plunger and the recess are aligned. The plunger may comprise a plunger body housing a plunger head and a spring. The spring may be configured to urge the plunger head toward an opening of the plunger body such that at least a portion of the plunger head extends out of the opening of the plunger body.

The plunger head and the recess may be complementary so that the plunger head fits snugly into the recess.

The threshold torque may be between 1 Nm and 10 Nm. The threshold torque may be between 1 Nm and 3 Nm. The threshold torque may be between 1 Nm and 5 Nm. The threshold torque may be between 3 Nm and 10 Nm. The threshold torque may be between 5 Nm and 10 Nm. The threshold torque may be between 7 Nm and 10 Nm. The threshold torque may be in the range of 1-10 Nm, such as 1-5 Nm (e.g., 1-3 Nm), 5-10 Nm (e.g., 7-10 Nm), or 3-7 Nm (e.g., 3-5 Nm or 5-7 Nm). The threshold torque may be determined according to at least one of: a strength of the spring of the plunger, a shape of the plunger head, a shape of the recess, and a number of holding mechanisms comprised in the holding apparatus. The threshold torque may be set such that a user is able to apply a torque to the threaded element that is greater than the threshold torque using one hand. The threshold torque may be a "finger tight" threshold torque, meaning a torque exceeding the threshold torque can be applied by a user's fingers. The threshold torque may be set such that a user is able to apply a torque to the threaded element that is greater than the threshold torque using one hand, while the threaded element is positioned on the user's back.

The threshold torque may be in the range of 0.1-1 Nm, such as 0.1-0.5 Nm (e.g., 0.1-0.3 Nm), 0.5-1 Nm (e.g., 0.7-1 Nm), or 0.3-0.7 Nm (e.g., 0.3-0.5 Nm or 0.5-0.7 Nm). The threshold torque may be determined according to a National Fire Protection Association (NFPA) vibration test standard. The NFPA vibration test requires no more than 3 mm of linear movement of the handwheel (and therefore the threaded element) when the threaded connector is subjected to applied vibrations. In order to ensure no more than 3 mm of vibration, in some embodiments the threaded connector may include four holding mechanisms which provide a total of 0.3 Nm of holding force. Thus, in such embodiments the threshold torque is said to be 0.3 Nm. Of course, it will be appreciated that other arrangements (e.g., with different numbers of holding mechanisms etc.) are possible while still meeting the same NFPA vibration test requirements.

The recess may be a concave recess. The plunger may comprise a rounded head complementary to the concave recess. The plunger and the recess may be so shaped such that applying the applied torque exceeding the threshold torque to the threaded element may cause the plunger to retract out of the concave recess thereby permitting the threaded element to rotate relative to the retainer.

It will be understood that the plunger may behave as a cam follower by following a profile of the concave recess. In this way, a displacement of the plunger may be determined by the profile of the concave recess. Therefore, as the plunger tends towards an edge of the concave recess, the plunger may be displaced to a greatest extent. Once the plunger reaches the edge of the concave recess, the plunger may no longer be constrained by the concave recess, such that the concave recess no longer provides an opposing torque to lateral movement of the plunger.

The threaded connector may further comprise a central conduit configured to permit a flow of breathing gas from a breathing gas cylinder to a pneumatic system. The threaded element and the retainer may be arranged around a longitudinal axis of the central conduit. The threaded element may be rotatable around the central conduit. The central conduit may comprise a keying surface configured to engage a complementary keying surface of the retainer to prevent rotation of the retainer around the central conduit relative to the threaded element.

The threshold torque may exceed a torque required to rotate the threaded element in a direction corresponding to untighten the threaded element from the corresponding thread.

The holding apparatus may be configured to inhibit rotation of the threaded element when the torque applied to the threaded element is below the threshold torque.

In another aspect, there is provided a breathing apparatus comprising. The breathing apparatus comprises a breathing gas cylinder; a pneumatic system, optionally comprising a first stage pressure reducer; and a threaded connector. The threaded element of the threaded connector is connected to the breathing gas cylinder and the central conduit of the threaded connector is connected to the pneumatic system, thereby connecting the breathing gas cylinder and the pneumatic system.

### Brief Description of the Drawings

Arrangements of the invention will now be described, by way of example, and with reference to the accompanying drawings, in which:
Figure 1 shows a breathing apparatus according to an example arrangement comprising a tank and a pneumatic system;
Figure 2 shows an embodiment of a threaded connector according to the present invention;
Figures 3A-3C show isolated views of components of a threaded connector according to the present invention;
Figures 4A and 4B show isolated views of components of a threaded connector according to the present invention; and
Figure 5 shows an embodiment of a threaded connector according to the present invention.

### Detailed Description of the Drawings

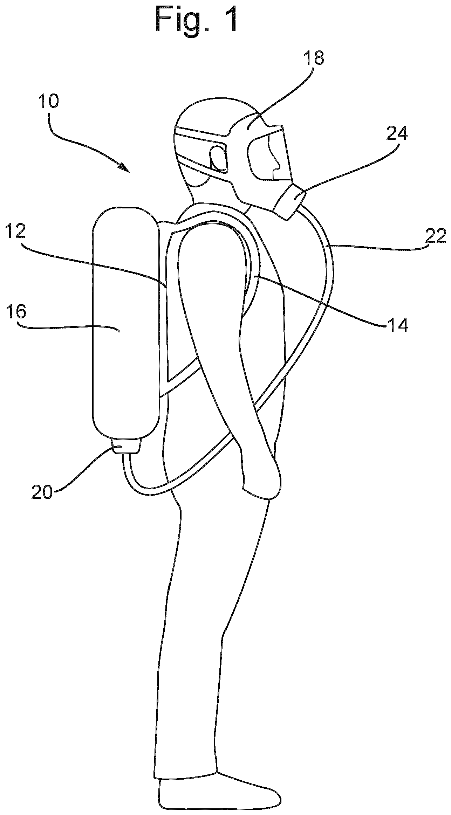

With reference to Figure 1, an example breathing apparatus 10 is shown. The breathing apparatus 10 is a self-contained breathing apparatus (SCBA) and comprises a support frame or back plate 12, straps 14 for securing the SCBA to a user, a breathing gas tank 16 (also referred to as tank 16), a face mask 18, a lung demand regulator 24 connectable to the face mask 18, and a pneumatic system 20 for delivering breathing gas from the tank 16 via a hose or flexible conduit 22 to the lung demand regulator 24, to thereby deliver breathing gas to the user wearing the face mask 18 on demand. The breathing apparatus 10 may further comprise other components or systems which are not shown, including but not limited to an electrical system, a monitoring system, or a communications system.

In this illustrated arrangement, the breathing apparatus 10 is a self-contained breathing apparatus (SCBA), but it should be understood that the lung demand regulator may also have applications in other types of breathing apparatus, such as self-contained underwater breathing apparatus (SCUBA) and emergency escape breathing apparatus.

Typically, a tank 16 used in a breathing apparatus will include a fitting such as a threaded fitting. The threaded fitting may be an internally or externally threaded fitting. The threaded fitting may be used for connecting the tank 16 to the pneumatic system 20. In this way, the threaded fitting may be used to discharge breathing gas from the tank 16 into the pneumatic system for onward delivery to the user. The threaded fitting can also be used to connect the tank 16 to a refilling station to refill the tank 16 with pressurised breathing gas, after the tank 16 has been depleted though use by a user.

Generally, a tank 16 may include a flow valve (not shown) connected directly to the threaded fitting. The flow valve is generally securely fastened to the tank 16 using appropriate torquing equipment to prevent the flow valve from loosening from the tank 16. The flow valve is generally removed for servicing and/or replacement of either the flow valve or the tank 16. Therefore, the flow valve can generally be considered to form part of the tank 16. The flow valve may comprise a handwheel used to adjust the flow rate out of the tank 16, through the flow valve, and out of an outlet port of the flow valve. The flow valve can therefore be used to adjust the flow rate of breathing gas out of the tank 16 and into the pneumatic system 20.

During an emergency response, a breathing apparatus user (e.g., a firefighter) can only safely work while their tank 16 has an adequate supply of breathing gas. After a certain period of time of use (e.g., around 15, 30, or 45 minutes) the supply of breathing gas in the tank 16 is depleted and the tank 16 must be replaced. It will therefore be appreciated that during an emergency response, the tank 16 of user's breathing apparatus may be replaced several times. The general procedure for replacing a tank 16 may include: disconnecting the tank 16 from the pneumatic system 20; loosening the straps 14 and releasing the tank 16 from the back plate 12; securing a replenished tank 16 to the back plate 12 using the straps 14; and connecting the tank 16 to the pneumatic system 20. The tank 16 is generally disconnected from the remaining breathing apparatus at a connection point between the outlet port of the flow valve and the pneumatic system 20 (specifically, the first stage pressure reducer). It will therefore be understood that the connection between the flow valve and the pneumatic system 20 is disconnected and reconnected every time the tank 16 is replaced and may thus be operated several times during every emergency response.

Existing connectors used to connect breathing gas tanks to pneumatic systems can often loosen over time, especially when breathing apparatus systems are transported or stored for long periods. Temperature fluctuations, vibrations, and/or side loading during transport/storage or use can exacerbate loosening of the connection. Of course, if a SCBA user entered a dangerous environment with a loose connection, their safety would be in danger.

As described previously, the invention described herein may generally relate to a threaded connector configured to connect a pneumatic system of a breathing apparatus to a threaded fitting of a breathing gas cylinder. The threaded connector generally comprises a rotatable threaded element configured to connect to a corresponding thread of a breathing gas cylinder, the rotatable threaded element being rotatable to tighten the threaded element to the corresponding thread and to untighten the threaded element from the corresponding thread; and a holding apparatus configured to selectively permit rotation of the threaded element when an applied torque applied to the threaded element exceeds a threshold torque.

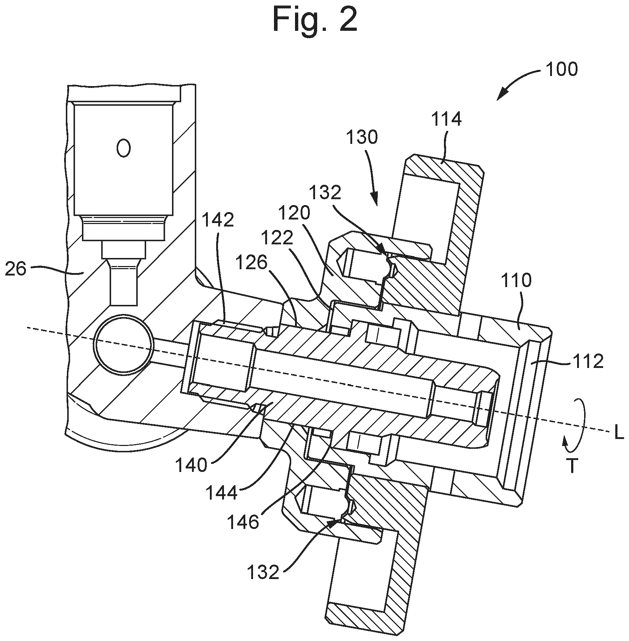

Turning to **Figure 2**, a threaded connector 100 according to an embodiment of the present invention is shown. The threaded connector 100 is configured to connect the tank 16 (e.g., via the flow valve) of the breathing apparatus 10 to the pneumatic system 20 of the breathing apparatus 10. As shown, a first stage pressure reducer 26 (comprised in the pneumatic system 20) is connected to the threaded connector 100 on one side. The threaded connector 100 includes a rotatable threaded element 110 configured to connect to a corresponding thread of the tank 16 (e.g., the outlet port of the flow valve of the cylinder 16, which is not shown but has a corresponding thread to the threaded element 110 to connect thereto). The threaded connector 100 of the embodiment shown also includes a central conduit 140. The central conduit 140 comprises a hollow core through which breathing gas is permitted to flow between the tank 16 and the first stage pressure reducer 26. The central conduit 140 comprises a threaded fitting 142 which is configured to connect to the first stage pressure reducer 26. In this way, the threaded connector 100 can act as an interface between the first stage pressure reducer 26 and the tank 16. The threaded fitting 142 is generally secured tightly to the first stage pressure reducer 26 and is not disconnected during normal use. The torquing required to secure the threaded fitting 142 to the first stage pressure reducer 26 will generally be such as to prevent the loosening of the threaded fitting 142 during normal use of the threaded connector 100.

It will be appreciated that when connecting and/or disconnecting the pneumatic system 20 to/from the tank 16 following the procedure outlined above, the tank 16 is fixed in place on the back plate 12. The threaded element 110 must therefore be rotated in order to connect it to the tank 16 (e.g., onto the outlet port of the flow valve).

The threaded element 110 is rotatable around its longitudinal axis (marked L in Figure 2). The longitudinal axis L runs through the centre of the central conduit 140. Thus, the threaded element 110 is rotatable around the central conduit 140. Rotating the threaded element 110 in a first direction corresponds to tightening the threaded element 110 onto the tank 16. Rotating the threaded element 110 in a second direction, opposite the first direction, corresponds to untightening the threaded element 110 from the tank 16. In this embodiment, the threaded element 110 includes an internal thread 112 that tightens onto an external thread of the tank 16 to provide fluid communication of breathing gas from the tank 16 to the central conduit 140. However, it will be appreciated that in other embodiments, the threaded element 110 may include an external thread that tightens onto an internal thread of the tank 16.

The central conduit 140 includes a shoulder 146 that constrains longitudinal motion of the threaded element 110 along the longitudinal axis L, such that the threaded element 110 cannot be removed from the threaded connector 100 during use.

The threaded connector 100 also includes a retainer 120. The central conduit 140 passes through the retainer 120 such that the retainer 120 is coaxial with the threaded element 110. The retainer 120 also includes a shoulder 122 which abuts (whether directly or indirectly e.g., via the threaded element 110) the shoulder 146 of the central conduit 140.

The threaded connector 100 further includes a holding apparatus 130. The holding apparatus 130 is configured to selectively permit rotation of the threaded element 110 when a torque T applied to the threaded element 110 (referred to as an applied torque T') exceeds a threshold torque. Selectively permitting rotation will be understood to mean permitting rotation under a set condition or when a criterion is met. In this case, the condition/criterion is met when the applied torque T exceeds the threshold torque. In this context, the applied torque T exceeds the threshold torque when the applied torque T is equal to or greater than the threshold torque.

In some embodiments, the threaded connector 100 includes a handwheel 114 arranged around the threaded element 110. The handwheel 114 provides a convenient surface for a user to grip to apply the applied torque T to the threaded element 110. The handwheel 114 also effectively increases the radius of the threaded element 110, thereby increasing the lever arm of the threaded element 110. By increasing the lever arm of the threaded element 110. The linear force required to achieve an applied torque T exceeding the threshold torque is reduced, making turning the threaded element 110 easier for a user. Increasing the lever arm of the threaded element 110 also has the effect of increasing linear distance through which the threaded element 110 must effectively be rotated in order to untighten the threaded element 110 from the tank 16. This prevents accidental, short movements of the handwheel 114 from inadvertently untightening the threaded element 110. Where the threaded element 110 is referred to in this description, this may be considered to include the handwheel 114 as part of the threaded element 110.

The holding apparatus 130 comprises one or more holding mechanisms 132. The one or more holding mechanisms 132 are configured to selectively disengage the threaded element 110 and the retainer 120 when the applied torque T exceeds the threshold torque.

In the simplest terms, each holding mechanism 132 comprises a protrusion and a corresponding recess. The protrusion extends from a first surface of one of the threaded element 110 and the retainer 120 and the recess is arranged on a corresponding second surface of the other of the threaded element 110 and the retainer 120. The first and second surfaces oppose each other, such that when the threaded element 110 rotates, the first and second surfaces move past each other. When no torque is applied to the threaded element 110 or when the applied torque T is below the threshold torque, the protrusion is received in and engaged with the recess. When the protrusion is engaged with the recess, the first and second surfaces are prevented from rotating past each other. Therefore, when the applied torque T is below the threshold torque the threaded element 110 is inhibited from rotating.

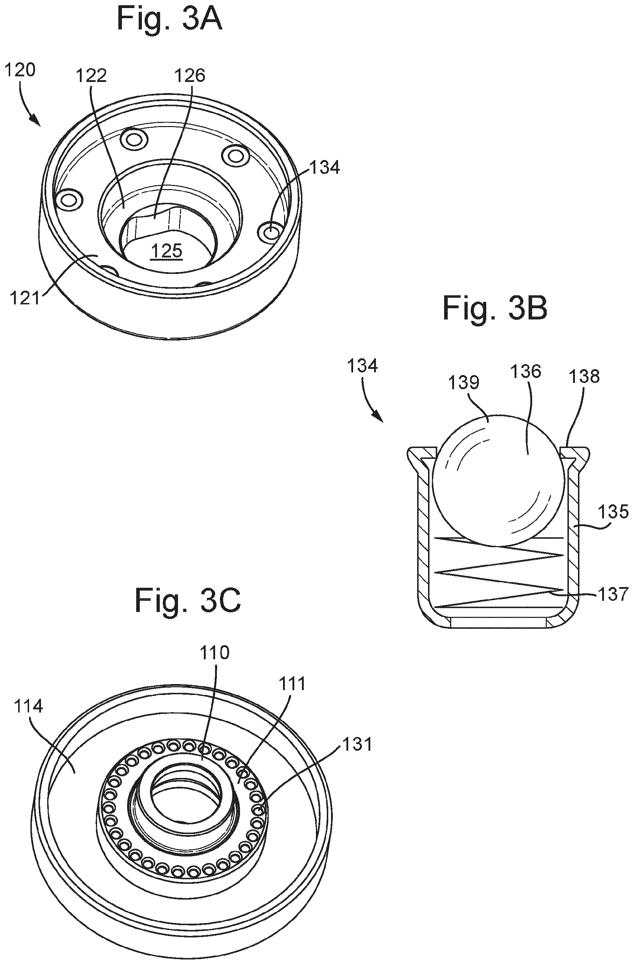

**Figure 3A** shows the retainer 120 in isolation. The retainer 120 includes a hole 125 through which the central conduit 140 passes. The hole 125 is generally circular in shape, but has a keying surface 126 which is configured to engage with a corresponding keying surface 144 of the central conduit 140. The keying surface 126 of the retainer 120 engaging with the corresponding keying surface 144 of the central conduit 140 prevents the retainer 120 from rotating around the central conduit 140. Therefore, the retainer 120 can be considered rotationally fixed, while the threaded element 110 is rotatable around the central conduit 140 relative to the retainer 120.

In this particular embodiment, the retainer 120 includes protrusions in the form of plungers 134. The plungers 134 are arranged in a circle concentric with the hole 125 (and the longitudinal axis L). In the embodiment shown in Figure 3A, there are six plungers 134, though it will be appreciated that this invention is applicable to embodiments with at least one plunger 134. It will be appreciated that increasing the number of plungers 134 generally increases the threshold torque. Each plunger 134 protrudes partially from the first surface 121 of the retainer 120. The protruding part of the plunger 134 is rounded in shape. In this embodiment, the first surface 121 is said to be an axially facing surface of the retainer 120, meaning the first surface 121 faces in a direction aligned with the longitudinal axis L.

**Figure 3B** shows a longitudinal cross sectional view of an exemplary plunger 134 in more detail. The plunger 134 includes a body 135 defining an internal cavity. Disposed within the body 135 is a plunger head. In this example, the plunger head is a ball bearing 136. Between an end wall of the internal cavity of the body 135 and the ball bearing 136 is a biasing element 137. The biasing element 137 (e.g., a spring) urges the ball bearing 136 towards an opening 138 of the body 135, such that a portion 139 of the ball bearing 136 protrudes out of the opening 138 of the body 135. The opening 138 is narrower than the diameter of the ball bearing 136 such that the ball bearing is constrained within the opening 138. When a lateral force is applied to the protruding portions 139 of the ball bearings 136, the curved surfaces of the protruding portions 139 cause the ball bearings 136 to retract back into the body 135, against the biasing of the biasing element 137.

Returning to Figure 3A, the plungers 134 are sunken into the retainer 120 such that only the protruding portions 139 of the ball bearings 136 which extend from the plungers 134 extend from the first surface 121 of the retainer 120.

**Figure 3C** shows the threaded element 110 and the handwheel 114 of Figure 2 in isolation. Around the threaded element 110, on the second surface 111, there are a plurality of recesses 131 disposed in a circle. The circle of recesses 131 is concentric with the threaded element 110. Further, the circle of recesses 131 has a radius equal to a radius of the circle of plungers 134 of the retainer 120. In this way, the protruding portions 139 of the plungers 134 align with the recesses 131 when the first surface 121 opposes the second surface 111. In this embodiment, the second surface 111 is said to be an opposing axially facing surface, meaning second surface 111 faces in a direction aligned with the longitudinal axis L, opposite the first surface 121.

The recesses 131 are concave with a shape complementary to the shape of the protruding portions 139 of the plungers 134. Therefore, when the applied torque T is below the threshold torque, the protruding portions 139 extend into the recesses 131, inhibiting rotation of the threaded element 110 relative to the retainer 120. Due to the curved shape of the protruding portions 139, when the applied torque T exceeds the threshold torque, the protruding portions 139 are pushed against by the corresponding recesses 131, causing the protruding portions 139 (i.e., the plungers 134) to retract. It will be appreciated that the plungers 134 can be considered cam followers in the way that they follow the profiles of the recesses 131 when the applied torque T exceeds the threshold torque. As the plungers 134 follow the recesses, the displacement of the plungers 134 changes. Once fully retracted, the plungers 134 are no longer engaged with the recesses 131, so the holding mechanisms 132 are said to be disengaged. In this state, once all of the holding mechanisms 132 are disengaged, the holding apparatus 130 permits rotation of the threaded element 110. Once the applied force T no longer exceeds the threshold torque, the plungers 134 extend into the nearest corresponding recess 131, thereby (re)engaging the holding mechanisms 132. Each plunger 134 and its corresponding recess 131 therefore acts as a detent.

As will be clear from Figures 3A and 3C, in this embodiment there are significantly more recesses 131 than there are plungers 134. The number of holding mechanisms 132 corresponds to the number of recess-plunger pairs. Therefore, this embodiment includes six holding mechanisms 132 (as there are six plungers 134). Given that there are significantly more recesses 131 than there are plungers 134, the pitch (i.e., the distance between any two adjacent recesses 131) of the recesses 131 is less than the pitch of the plungers 134 (i.e., the distance between any two adjacent plungers 134). This means that even with just a few plungers 134, the maximum distance the threaded element 110 is required to rotate for the plungers 134 to align with a corresponding recess 131 is reduced. By minimising this distance, any backlash in the threaded connector 100 can be reduced. In this context, backlash can be defined as free rotation of the threaded element 110 after the applied torque T drops below the threshold torque, but before the plungers 134 have (re)engaged with the recesses 131. By minimising this backlash, the ability for the threaded element 110 to inadvertently untighten is further reduced. In some embodiments, where a diameter of a circle defined by the recesses 131 is 26.5 mm, the number of recesses 131 may exceed 28 such that the pitch of the recesses 131 is less than 3 mm. By reducing the pitch of the recesses 131 to less than 3 mm, the requirements of the National Fire Protection Association (NFPA) vibration test (no more than 3 mm of linear movement) are met. Of course, it will be appreciated that threaded connectors with alternative numbers of recesses and diameters are applicable to the present invention, while still meeting the NFPA vibration test requirements.

Several different characteristics of the threaded connector 100 can be altered to vary the threshold torque. For example, increasing the number of plungers 134 will increase the threshold torque as more force is required to oppose the biasing element 137 of each individual plunger 134. Increasing the strength of the biasing element 137 (e.g., with a stiffer spring) in each plunger 134 will also lead to an increase in the threshold torque as more force is required to compress each plunger 134 by the same displacement. Additionally, altering the shape of the plunger heads and/or the recesses 131 will alter the threshold force. For example, increasing the slope of the sides of the recesses 131 will increase the threshold force. The threshold force is general set to be greater than a torque required to untighten the threaded element 110 from corresponding thread of the tank 16. In this way, the holding apparatus 130 will not disengage before the threaded element 110 beings to untighten. The threshold force may similarly be set to be greater than a torque required to tighten the threaded element 110.

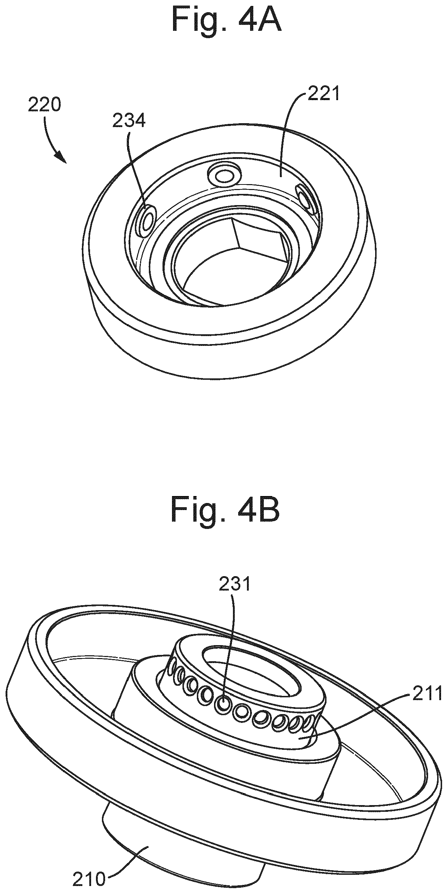

Turning to **Figure 4A** and **Figure 4B****,** an alternative retainer 220 and an alternative threaded element 210 according to a different embodiment of the present invention are shown. The retainer 220 and threaded element 210 work similarly to the retainer 120 and threaded element 110 of the embodiment of Figure 2 and Figures 3A-3C, however the arrangements of the plungers 234 and recesses 231 are different.

In particular, the retainer 220 includes a first surface 221 which is an annular surface, rather than an axially facing surface 121 of the previously discussed retainer 120. The annular first surface 221 is a cylindrical internal surface. On the annular first surface 221 there is disposed six plungers 234. These plungers 234 are functionally identical to the plungers 134 of Figures 3A and 3B.

The threaded element 210 includes a second surface which is an opposing annular surface 211, rather an opposing axially facing surface 111 of the previously discussed threaded element 110. The second annular surface 211 is a curved external surface. On the second annular surface there is disposed a plurality of recesses 231. In use, the first surface 221 and the second surface 211 are arranged concentrically such that the plungers 234 and the corresponding recesses 231 are arranged radially.

It will, of course, be appreciated that in some embodiments the first surface 221 may be an external surface of the retainer 220 and the second surface 211 may be an internal surface of the threaded element 210.

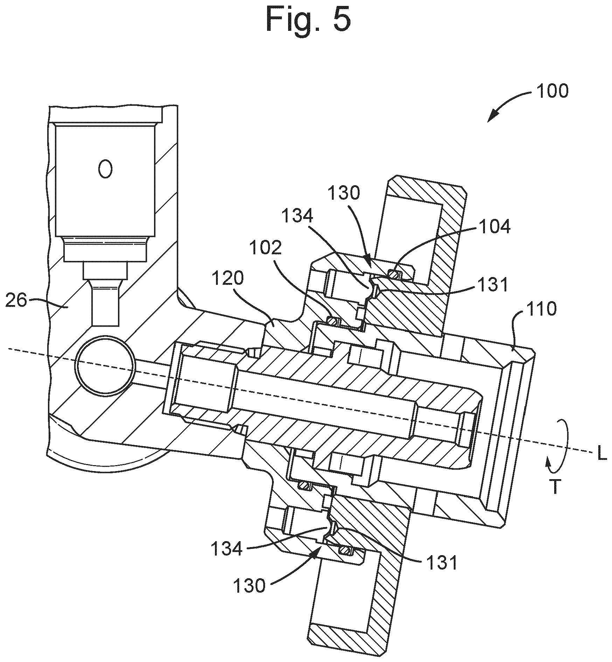

Figure 5 shows a further embodiment of the present invention, which is similar to the embodiment shown in Figure 2. Importantly, the embodiment of Figure 5 includes a number of environmental seals 102, 104 between the retainer 120 and the threaded element 110. The environmental seals 102, 104 prevent environmental contaminants such as grit, dust, and other particulates from entering the seam between the retainer 120 and the threaded element 110. It will be appreciated that if, for example, grit was to enter this area, the grit could enter the recesses. If the recesses 131 become clogged with grit, this could prevent the plungers 134 from engaging with the recesses 131, thereby preventing the holding apparatus 130 from inhibiting movement of the threaded element 110. Therefore, the environmental seals 102, 104 ensure the threaded connector 100 can continue to function, even in highly contaminated environments.

There are numerous other embodiments that fall within the scope of the present invention, some of which will now be described. Although these embodiments are not illustrated in the figures, this in no way diminishes their applicability. Further, unless explicitly excluded, the features, characteristics and/or advantages of the illustrated embodiments are also applicable to the further embodiments described herein.

In some embodiments, the plungers may instead be fixed protrusions extending from the first surface of the retainer, which engage with corresponding recesses on the second surface of the threaded element. In these embodiments, the first surface of the retainer and the second surface of the threaded element are able to move toward and apart from one another, but are urged together by a biasing element. When the applied torque is less than the threshold torque, the fixed protrusions engage with corresponding recesses of the threaded element, preventing rotation of the threaded element. Once the applied torque exceeds the threshold torque, the fixed protrusions begin to slide out of the recesses by pushing the first and second surfaces (i.e., the retainer and the threaded element) apart from one another, against the biasing element. It will therefore be understood that in this case, the threshold force is determined at least in part by the strength of the biasing element which urges the first and second surfaces together. These embodiments are applicable where the first and second surfaces are axially facing, opposing surfaces, or where the first and second surfaces are concentric annular surfaces. Though, in the latter case a mechanism to increase the diameter of the first surface of the retainer is required.

Other embodiments applicable to the present invention may include deformable protrusions, rather than plungers or fixed protrusions. In these embodiments, the deformable protrusions may engage corresponding recesses when the applied torque is less than the threshold torque. Once the applied torque exceeds the threshold torque, the deformable protrusions may deform (e.g., flatten and/or compress) such that they no longer engage the recesses. Once deformed, the deformable protrusions no longer engage the corresponding recesses, so the threaded element is able to rotate. It will be appreciated that in these embodiments, the properties of the deformable protrusions influence the threshold torque. For example, increasing the stiffness of the deformable protrusion can increase the threshold torque. Further, increasing the cross sectional area of the deformable protrusion can increase the threshold torque by making the deformable protrusion more resistant to deformation.

Although the embodiments described herein have generally referred to the protrusions as being disposed on the retainer and the recesses being disposed on the threaded element. There is no reason why embodiments of the present invention could not employ the opposite arrangement. Indeed, embodiments with protrusions disposed on the threaded element and recesses disposed on the retainer are within the scope of the present invention.

It will be appreciated that the various forms of protrusions disclosed herein are not mutually exclusive. It should be readily apparent that any combination the various protrusion types could be implemented in embodiments of the present invention.

The threshold torque may be between 1 Nm and 10 Nm. The threshold torque may be between 1 Nm and 3 Nm. The threshold torque may be between 1 Nm and 5 Nm. The threshold torque may be between 3 Nm and 10 Nm. The threshold torque may be between 5 Nm and 10 Nm. The threshold torque may be between 7 Nm and 10 Nm. The threshold torque may be in the range of 1-10 Nm, such as 1-5 Nm (e.g., 1-3 Nm), 5-10 Nm (e.g., 7-10 Nm), or 3-7 Nm (e.g., 3-5 Nm or 5-7 Nm). As previously described, the threshold torque can be set by adjusting one or more parameters of the threaded connector. The threshold torque may be set such that a user is able to apply a torque to the threaded element that is greater than the threshold torque using one hand. The threshold torque may be a "finger tight" threshold torque, meaning a torque exceeding the threshold torque can be applied by a user's fingers.

The threshold torque may be in the range of 0.1-1 Nm, such as 0.1-0.5 Nm (e.g., 0.1-0.3 Nm), 0.5-1 Nm (e.g., 0.7-1 Nm), or 0.3-0.7 Nm (e.g., 0.3-0.5 Nm or 0.5-0.7 Nm). The threshold torque may be determined according to a National Fire Protection Association (NFPA) vibration test standard. The NFPA vibration test requires no more than 3 mm of linear movement of the handwheel (and therefore the threaded element) when the threaded connector is subjected to applied vibrations. In order to ensure no more than 3 mm of vibration, in some embodiments the threaded connector may include four holding mechanisms which provide a total of 0.3 Nm of holding force. Thus, in such embodiments the threshold torque is said to be 0.3 Nm. Of course, it will be appreciated that other arrangements (e.g., with different numbers of holding mechanisms etc.) are possible while still meeting the same NFPA vibration test requirements.

The threaded connector of the present invention enables a user to control the tightening/untightening of the threaded element just using one hand, while preventing inadvertent rotation of the threaded connector. It will be appreciated that where the user is a firefighter responding to an emergency incident (e.g., a fire), it is essential that they are able to respond as quickly as possible to the incident. By enabling the firefighter to control (e.g., begin) the flow of breathing gas from the tank using just one hand, the firefighter is able to respond more quickly to an incident, thus increasing the likelihood that any people/property affected by the incident can be saved.

Further, during transportation or storage of a breathing apparatus comprising the threaded connector, the risk of accidentally untightening the threaded element from the tank is greatly reduced. A user must deliberately apply an applied torque to the threaded connector that exceeds the threshold torque in order to rotate the threaded element. The user must also maintain this torque for the duration of untightening the threaded element or else the holding apparatus will (re)engage. By setting the threshold torque appropriately (i.e., sufficiently high), the possibility of accidentally untightening the threaded element from the tank is greatly reduced. Therefore, it would be very unlikely that such an untightening could occur due to transportation or storage of the breathing apparatus for long periods, regardless of any temperature fluctuations, vibrations, and/or side loading during transport/storage or use. The threshold torque will generally be set at a value that is easy for a user to intentionally apply to the threaded element, but which is very unlikely to be applied by accident.

In all of the described embodiments, the torque required to rotate the threaded element (either tightening or untightening) is less than the torque required to untighten the threaded fixing of the central conduit. Put another way, the threshold torque is set at less than the torque required to untighten the threaded fixing of the central conduit. In this way, the central conduit (and thus the threaded connector) will not loosen or detach from the first stage pressure reducer regardless of whether the threaded element is being tightened or loosened.

Some embodiments of the present invention may include additional or alternative features which may further improve one or more characteristics of the invention. It will be appreciated that, unless mutually exclusive or explicitly excluded, any combination of features disclosed herein are applicable to the present invention.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A threaded connector configured to connect a pneumatic system of a breathing apparatus to a threaded connection of a breathing gas cylinder, the threaded connector comprising:
a rotatable threaded element configured to connect to a corresponding thread of a breathing gas cylinder, the rotatable threaded element being rotatable to tighten the threaded element to the corresponding thread and to untighten the threaded element from the corresponding thread; and
a holding apparatus configured to selectively permit rotation of the threaded element when an applied torque applied to the threaded element exceeds a threshold torque.

2. The threaded connector of claim 1, further comprising a retainer arranged coaxially with the threaded element, wherein the holding apparatus is configured to selectively permit rotation of the threaded element relative to the retainer.

3. The threaded connector of claim 2, wherein the holding apparatus comprises one or more holding mechanisms, the or each holding mechanism being configured to selectively disengage the threaded element and the retainer when the applied torque exceeds the threshold torque.

4. The threaded connector of claim 3, wherein the or each holding mechanism comprises a recess and a protrusion configured to engage the recess to thereby inhibit rotation between the threaded element and the retainer, wherein one of the recess and the protrusion are disposed on the threaded element and the other of the recess and the protrusion are disposed on the retainer.

5. The threaded connector of claim 4, wherein when the applied torque exceeding the threshold torque is applied to the threaded element, the protrusion of the or each holding mechanism retracts from the recess of the or each holding mechanism, thereby permitting the threaded element to rotate past the retainer.

6. The threaded connector of claim 4 or 5, wherein:
the threaded element comprises a first plurality of recesses arranged around a rotational axis of the threaded element; and
the retainer comprises a second plurality of protrusions arranged to cooperate with the first plurality of recesses of the threaded element;
optionally wherein the first plurality and the second plurality are different sizes, further optionally wherein the first plurality is greater than the second plurality.

7. The threaded connector of any of claims 4-6, wherein the recess of the or each holding mechanism is arranged on an axially facing surface of the threaded element and wherein the protrusion of the or each holding mechanism is arranged on an opposing axially facing surface of the retainer, optionally wherein the axially facing surface of the threaded element and the opposing axially facing surface of the retainer are biased toward each other.

8. The threaded connector of any of claims 4-6, wherein the recess of the or each holding mechanism is arranged on an annular surface of the threaded element and wherein the protrusion of the or each holding mechanism is arranged on an opposing annular surface of the retainer, optionally wherein the annular surfaces are concentric, further optionally wherein the annular surface of the threaded element is an external annular surface of the threaded element and the opposing annular surface of the retainer is an opposing internal annular surface of the retainer.

9. The threaded element of any of claims 4-8, wherein the protrusion of the or each holding mechanism is a plunger, optionally a ball plunger, configured to retract away from the recess of the or each holding mechanism when the applied torque exceeds the threshold torque, and wherein the plunger is biased to extend into the recess when the plunger and the recess are aligned, optionally wherein the plunger comprises a plunger body housing a plunger head and a spring, the spring being configured to urge the plunger head toward an opening of the plunger body such that at least a portion of the plunger head extends out of the opening of the plunger body.

10. The threaded element of claim 9, wherein the threshold torque is between 0.1 Nm and 10 Nm, optionally wherein the threshold torque is determined according to at least one of: a strength of the spring of the plunger, a shape of the plunger head, a shape of the recess, and a number of holding mechanisms comprised in the holding apparatus.

11. The threaded element of any of claims 4-10, wherein the recess is a concave recess and the plunger comprises a rounded head complementary to the concave recess such that applying the applied torque exceeding the threshold torque to the threaded element causes the plunger to retract out of the concave recess thereby permitting the threaded element to rotate relative to the retainer.

12. The threaded connector of any of claims 2-11, further comprising a central conduit configured to permit a flow of breathing gas from a breathing gas cylinder to a pneumatic system, wherein the threaded element and the retainer are arranged around a longitudinal axis of the central conduit, and optionally wherein the threaded element is rotatable around the central conduit, further optionally wherein the central conduit comprises a keying surface configured to engage a complementary keying surface of the retainer to prevent rotation of the retainer around the central conduit relative to the threaded element.

13. The threaded connector of any of the preceding claims, wherein the threshold torque exceeds a torque required to rotate the threaded element in a direction corresponding to untighten the threaded element from the corresponding thread.

14. The threaded element of any of the preceding claims, wherein the holding apparatus is configured to inhibit rotation of the threaded element when the torque applied to the threaded element is below the threshold torque.

15. A breathing apparatus comprising:
a breathing gas cylinder;
a pneumatic system, optionally comprising a first stage pressure reducer;
and a threaded connector according to claim 12,
wherein the threaded element of the threaded connector is connected to the breathing gas cylinder and the central conduit of the threaded connector is connected to the pneumatic system, thereby connecting the breathing gas cylinder and the pneumatic system.
